# EUROPÄISCHE PATENTSCHRIFT

(11) **EP 1 346 902 B1**
(45) Veröffentlichungstag und Bekanntmachung des Hinweises auf die Patenterteilung: **02.05.2007**
(21) Anmeldenummer: 03006202.0
(22) Anmeldetag: 19.03.2003
(51) Int. Cl.: B62D 25/06, B62D 29/04

(54) **Dachmodul für ein Fahrzeug und Herstellungsverfahren dafür**
Roof module for a vehicle and method of its production
Module de toit pour un véhicule et procédé pour sa fabrication

(30) Priorität: 20.03.2002 DE 10212370
(43) Veröffentlichungstag der Anmeldung: 24.09.2003
(73) Patentinhaber: Webasto AG, 82131 Stockdorf (DE)
(72) Erfinder: Dichtl, Matthias, 82547 Eurasburg (DE); Stromayr, Peter, 82216 Gernlinden (DE)

(56) Entgegenhaltungen:
- EP-A- 0 995 667
- DE-A- 10 033 232
- DE-A- 19 731 903
- US-A- 4 475 765
- US-A- 4 598 008

## Beschreibung

Die Erfindung betrifft ein Dachmodul für ein Fahrzeug mit einer Dachaußenhaut und fahrzeuginnenseitig angeordneten Schichten aus Verbundwerkstoffen gemäß dem Oberbegriff des Patentanspruches 1 sowie ein Verfahren zur Herstellung eines vielschichtigen Dachmoduls für ein Fahrzeug gemäß dem Oberbegriff des Patentanspruches 10.

Dachmodule, wie sie beispielsweise aus der EP 0 960 803 A2 bekannt sind, stellen von der Fahrzeugkarosserie getrennt hergestellte Fahrzeugdächer dar, die sandwichartig mit einer Dachhaut und einer darunter angeordneten Kunststoffschicht - beispielsweise aus Schaumkunststoff - ausgebildet sind.

In der EP 0 995 667 A1 wird ein Dachmodul als Verbundbauteil für Fahrzeuge beschrieben, wobei sich das Dachmodul für eine Erhöhung der Beulsteifigkeit und der Gesamtfestigkeit aus einer Dachaußenhaut und einer fahrzeuginnenseitig damit verbundenen armierten Kunststoffschicht zusammensetzt. Die Kunststoffschicht besteht aus einem PUR-Schaum, der aus einem Polyol- und einem Isocyanat-Anteil in einem Mischungsverhältnis von 1 zu 2 gebildet ist. Die Mischung der beiden Kunststoffkomponenten mit einer Glasfaserarmierung erfolgt nach dem Long-Fiber-Injection (LFI)-Verfahren, bei welchem mit PUR benetzte Glasfasern in eine mit der Außenhaut bereits ausgelegten Negativform durch Druckluft eingeblasen werden. Derartig aufgebaute Dachmodule weisen keine hohe Steifigkeit und ein aufgrund des hohen An-teils an Polyurethan (PUR) bestehendes Gesamtgewicht auf.

Weiterhin beschreibt die Druckschrift DE 198 29 859 A1 einen Schichtaufbau umfassend eine Dachaußenhaut, eine LFI-Schicht und eine Trägerschicht aus Versteifungsmaterial. Der Oberbegriff der Ansprüche 1 bzw. 9 wurde aus der Druckschrift DE 198 29 859 A1 abgeleitet.

Die Druckschrift DE 196 14 056 A1 beschreibt ein Verfahren zur Herstellung faserverstärkter Formteile aus ungesättigten Polyesterharzen, Epoxyharzen, PUR oder anderem Matrixmaterial und Verstärkungsmaterial, z.B. mineralischen, synthetischen oder natürlichen Fasern.

Weiterhin beschreibt die Druckschrift DE 198 29 859 A1 einen Schichtaufbau umfassend eine Dachaußenhaut, eine LFI-Schicht und eine Trägerschicht aus Versteifungsmaterial.

Die Druckschrift DE 196 14 056 A1 beschreibt ein Verfahren zur Herstellung faserverstärkter Formteile aus ungesättigten Polyesterharzen, Epoxyharzen, PUR oder anderem Matrixmaterial und Verstärkungsmaterial, z.B. mineralischen, synthetischen oder natürlichen Fasern.

In der DE 32 02 594 C2 wird ein Dachmodul aus einer luft- und regendichten Dachaußenschicht, einer mittleren, eigensteifen Waben-/Strukturschicht mit Aluminium- oder Pappstegen bzw. halbharten Schaum- und Vliesstrukturen, einer halbsteifen, porösen Innenschicht und einer Polster- und/oder Dekorschicht beschrieben. Ein derartiges vielschichtiges Dachmodul wird mittels eines Heißpreßverfahrens gefertigt. Derartige auf einer Waben- bzw. Sandwichstruktur basierende Dachmodule weisen den Vorteil auf, daß sie aufgrund der als Versteifungsschicht und Trägerschicht für weitere Schichten agierenden Wabenschicht bei geringerem Gesamtgewicht eine höhere Steifigkeit aufweisen. Allerdings ist die Herstellung von derartig auf einer Wabenstruktur basierenden vielschichtigen Dachmodulen zeitaufwendig und kompliziert, da in der Regel Glasfasermatten, die sich beidseitig der Wabenschicht erstrecken, schwierig zu handhaben sind. Desweiteren sind derartige Glasfasermatten im Vergleich zu Glasfasern, wie sie bei den LFI-Herstellungsverfahren verwendet werden, kostenintensiv. Hinzukommt, daß eine Positionierung der Wabenschicht innerhalb einer Negativform, die für die Durchführung des sich anschließenden Preßvorganges dient, in der Regel aufwendig und zeitraubend ist.

Demzufolge liegt der vorliegenden Erfindung die Aufgabe zugrunde, ein Dachmodul zu Verfügung zu stellen, welches eine hohe Steifigkeit und ein geringes Gesamtgewicht aufweist. Desweiteren ist es Aufgabe der Erfindung, ein Verfahren zur Herstellung eines derartigen Dachmoduls zeitsparender und kostengünstiger zu gestalten.
Diese Aufgabe wird vorrichtungsseitig durch die Merkmale des Anspruches 1 und verfahrensseitig durch die Merkmale des Patentanspruches 10 gelöst.

Ein wesentlicher Punkt der Erfindung liegt darin, daß ein Dachmodul für ein Fahrzeug mit einer Dachaußenhaut und fahrzeuginnenseitig angeordneten Schichten aus Verbundwerkstoffen beginnend von der Außenhaut aus folgenden Schichtaufbau zumindest flächenanteilig nach innen aufweist: eine mittels dem Long-Fiber-Injection-Verfahren hergestellte erste Faser enthaltende Schicht und eine Trägerschicht aus Versteifungsmaterial, die vorzugsweise wabenförmig aufgebaut ist. Durch eine Kombination einer auf dem LFI-Herstellungsverfahren basierenden Schicht mit einer wabenförmigen sandwichartigen Trägerschicht werden die Vorteile beider diesen Schichten zugrundeliegenden Techniken miteinander kombiniert. Es erübrigt sich nämlich zum einen das schwierige und zeitraubende Handling mit Glasfasermatten, wie sie bisher bei wabenförmigen Trägerschichten als Schicht zwischen einer PU-Schicht und der Trägerschicht notwendig waren, und zum anderen die Abstriche, die bei dem Gesamtgewicht und der Steifigkeit gemäß dem LFI-Verfahren gemacht werden mussten.

Die vorzugsweise wabenförmig aufgebaute Trägerschicht kann aus einem Kartonmaterial, einem Kunststoffmaterial aus Naturstoffen, einem Metall enthaltenden Material und/oder einem Nicht-Eisenmetall-Material bestehen.

Die Faser enthaltende Schicht kann eine Glasfaser, eine Naturfaser und/oder eine Kunststoffaser sein.

Aufgrund der Kombination von Schichten, die gemäß der LFI-Technik hergestellt wurden, mit der wabenförmigen Trägerschicht (Struktan, PHC) ergibt sich vorteilhaft das Einsparen an notwendigem Material, da sich Fasermatten, wie Glasfaser- oder Kunststoffasermatten, erübrigen und sich der Anteil an benötigtem PUR zum Benetzen der Glasfasern gemäß der LFI-Technik aufgrund der zusätzlich versteifenden Trägerschicht reduziert.

Die Waben der wabenförmig aufgebauten Trägerschicht können gemäß einer bevorzugten Ausführungsform als Schutz gegen eine Feuchtigkeitsaufnahme mit einem Imprägniermittel imprägniert sein, wobei eine ausreichende Verbindung der Faser enthaltenden Schichten mit der wabenförmigen Trägerschicht durch eine Klebstoffverbindung sichergestellt wird.

Sofern es sich bei der wabenförmigen Trägerschicht um ein Kartonmaterial handelt, wird dies gemäß einer bevorzugten Ausführungsform bakterienresistent behandelt, um in Gebieten mit hoher Luftfeuchtigkeit die Ansammlung von Bakterien in den einzelnen Waben zu vermeiden.

Die nach oben und unten offenen Waben weisen vorzugsweise eine Schichtdicke von 10 mm auf, die während eines Preßvorgangs in bestimmten Dachbereichen auf eine Schichtdicke von bis zu 3 mm reduziert werden kann, um beispielsweise im Kopfbereich eine maximal mögliche Kopffreiheit für die Fahrzeuginsassen oder das Anbringen zusätzlicher Anbauteile, wie beispielsweise Handgriffe, zu ermöglichen.

Da die etwa 25 mm langen einzelnen Glasfasern, wie sie mit PUR vermischt mittels Druckluft in eine Negativform gemäß der LFI-Technik zur Herstellung der Faser enthaltenden Schicht geblasen werden, kostengünstiger als die bei der PU-PHC-PU-Technologie verwendeten Glasfasermatten sind, ergibt sich eine erhebliche Kostenreduzierung bei der Herstellung von Dachmodulen.

Gemäß einer bevorzugten Ausführungsform folgt auf die Trägerschicht fahrzeuginnenseitig eine zweite mittels dem Long-Fiber-Injection-Verfahren hergestellte Faser enthaltende Schicht, um dadurch die Steifigkeit des Dachmoduls zusätzlich zu erhöhen.

Da die Längsachsen der vorzugsweise parallel zueinander verlaufenden Waben der Trägerschicht senkrecht zu den einzelnen Schichtebenen ausgerichtet sind, findet bei dem Aufblasen der mit PUR benetzen Fasern, wie Glasfasern, gemäß dem LFI-Verfahren ein teilweises Eindringen der einzelnen Glasfasern in die nach oben und unten offene Wabenstruktur statt. Dies hat zur Folge, daß eine Reduzierung der Sandwich-Steifigkeit aufgrund der unregelmäßigen Verteilung der PUR benetzten Glasfasern stattfindet und ein Mehrbedarf an PUR notwendig ist, da die offenen Waben zumindest teilweise mit PUR gefüllt werden. Deshalb wird gemäß einer Weiterbildung der Erfindung zwischen der ersten, oberen Faser enthaltenden Schicht und der Träger-schicht eine erste die Trägerschicht abdeckende Vliesschicht angeordnet und zwischen der zweiten, unteren Faser enthaltenden Schicht und der Trägerschicht eine zweite die Trägerschicht abdeckende Vliesschicht angeordnet. Eine derartige Vliesschicht kann aus Glasfaservlies bestehen und verhindert als Sperrvlies das Eindringen von PUR in die nach oben und unten offenen Waben während der Anwendung des LFI-Verfahrens.

Vorteilhaft bewirkt das Sperrvlies zudem eine homogene Materialverteilung von Glasfasern und PUR innerhalb einer gemäß dem LFI-Verfahren hergestellten Faser enthaltenden Schicht, wodurch nur wenige Oberflächenfehler in diesen Schichten auftreten können. Vorzugsweise ist das Sperrvlies derart gestaltet, daß es die Glasfasern von der ersten und zweiten Faser enthaltenden Schicht vor dem Eindringen in die Wabenstruktur bewahrt, jedoch das PUR mit einer vordefinierten Eindringtiefe in die Wabenstruktur eindringen lässt, um so die Haftung zwischen der ersten und zweiten Faser enthaltenden Schicht und der wabenförmigen Trägerschicht sicherzustellen bzw. zu erhöhen.

Das Sperrvlies kann als erste und zweite abdeckende Vliesschicht bei der Herstellung des Dachmoduls bereits mit der Wabenschicht verbunden sein, um so ein schnelles Einlegen der wabenförmigen Trägerschicht einschließlich der Vliesschichten in eine Negativform zu ermöglichen und ein evtl. anfallendes Handling von glasfaservliesartigem Material innerhalb der Negativform zu vermeiden.

Die erste und zweite Faser enthaltende Schichten mit Polyurethan können durch Variation der zwei Parameter Faser und Polyurethan in Abhängigkeit von den Anforderungen an das Gesamtgewicht, das Aussehen, die Festigkeit und die Funktionalität des Dachmoduls und in Abhängigkeit von der evtl. notwendigen Integration von zusätzlichen Bauteilen in das Dachmodul angepaßt werden.

Fahrzeuginnenseitig kann der erfindungsgemäße Schichtaufbau mit einer Kaschierschicht abgeschlossen werden, um ein angenehmes Aussehen des Dachmoduls für den Fahrzeuginsassen zu schaffen. Die Kaschierschicht kann vorteilhafterweise zusätzlich mit einer Dampfsperrschicht aufgetragen werden, wobei die Dampfsperrschicht in der Kaschierschicht integriert oder als separate Schicht angeordnet ist. Auf diese Weise kann die ungewollte Aufnahme von Feuchtigkeit und/oder Wasser durch die Polyurethan-Verbundschichten vermieden werden.

Alternativ kann die Dampfsperrschicht ohne eine Kaschierschicht fahrzeuginnenseitig beispielsweise in Form einer Lackschicht oder einer Lackfolie zur Imprägnierung des Dachmoduls aufgetragen werden.

Ein Verfahren zur Herstellung eines derartigen vielschichtigen Dachmoduls mit einer Dachaußenhaut und fahrzeuginnenseitig angeordneten Schichten aus Verbundwerkstoffen umfaßt die Schritte des Einlegens der Dachaußenhaut in eine Negativform, des Bildens einer ersten Faser enthaltenden Schicht durch Blasen von mit Polyurethan benetzten Fasern mittels Druckluft auf die fahrzeuginnenseitige Oberfläche der Dachaußenhaut, des Bildens einer Trägerschicht aus Versteifungsmaterial durch Einlegen derjenigen in die Negativform unter Abdeckung der ersten Faser enthaltenden Schicht und des Zusammenpressens der Schicht und der Dachaußenhaut in einer vorbestimmten Zeitspanne mit einem vorbestimmten Temperaturverlauf.

Auf diese Weise ist ein schnelles und einfaches Herstellungsverfahren mit einer reduzierten Taktzeit zur Verfügung gestellt, da beispielsweise sich das Handling mit Glasfasermatten erübrigt.

Vorzugsweise wird eine zweite Faser enthaltende Schicht auf der fahrzeuginnenseitigen Oberfläche der Trägerschicht für die Erhöhung der Steifigkeit angeordnet. Diese zweite und auch die erste Faser enthaltende Schicht können durch eine die Trägerschicht abdeckende Vliesschicht von der Trägerschicht getrennt angeordnet werden, wobei diese Vliesschichten vor dem Einlegen der Trägerschicht in die Negativform bereits mit der Trägerschicht verbunden sind. Somit muß nach dem Einlegen der Außenhaut in die Negativform per Druckluft eine erste auf dem LFI-Verfahren beruhende Faser enthaltende Schicht per Druckluft in die Negativform eingeblasen werden, die Trägerschicht einschließlich der Vliesschicht in die Form eingelegt werden und eine zweite auf dem LFI-Verfahren basierende Faser enthaltende Schicht per Druckluft auf die Trägerschicht geblasen werden. Nach einem sich anschließenden Preßvorgang kann das Dachmodul in seiner Endform den Preßformen entnommen werden.

Die für einen Preßvorgang vorbestimmte Zeit wird durch die Reaktionszeit des Polyurethan vorgegeben und kann circa 4 Minuten betragen. Nach der Beendigung des Preßvorganges wird das gepreßte Dachmodul zur Beibehaltung der Formstabilität in eine separate Abkühlform eingelegt.

Weitere vorteilhafte Ausführungsformen ergeben sich aus den Unteransprüchen.

Vorteile und Zweckmäßigkeiten können der nachfolgenden Beschreibung in Verbindung mit der Zeichnung entnommen werden. Hierbei zeigen:
Fig. 1 eine schematische Querschnittsansicht einer ersten Ausführungsform des erfindungsgemäßen Schichtaufbaus eines Dachmoduls,
Fig. 2 eine schematische Draufsicht einer Trägerschicht, wie sie in dem Schichtaufbau des erfindungsgemäßen Dachmoduls verwendet wird,
Fig. 3 eine schematische Querschnittsansicht einer zweiten Ausführungsform des erfindungsgemäßen Schichtaufbaus des Dachmoduls, und
Fig. 4 eine schematische Querschnittsansicht einer dritten Ausführungsform des erfindungsgemäßen Schichtaufbaus des Dachmoduls.

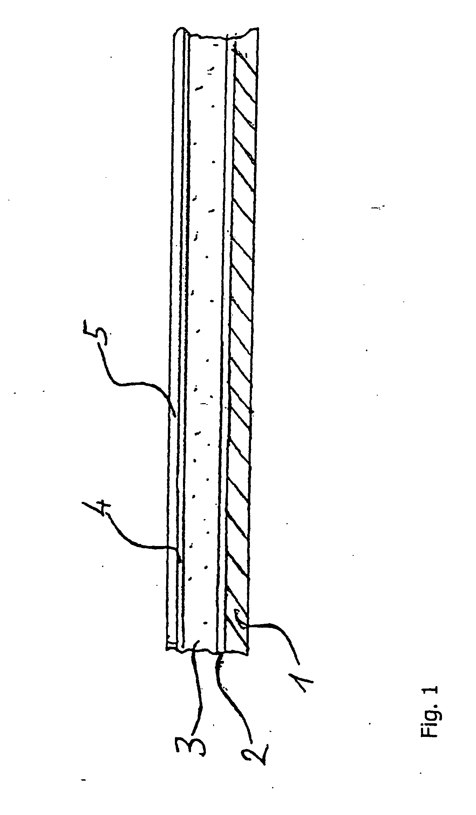

Fig. 1 zeigt in einer schematischen Querschnittsansicht eine erste Ausführungsform des erfindungsgemäßen Schichtaufbaus des Dachmoduls. Der Aufbau eines derartigen Folienverbundes umfaßt eine Dachaußenhaut 1, eine erste gemäß dem LFI-Verfahren hergestellte Glasfaser enthaltende Schicht 2, eine vorzugsweise wabenförmige Trägerschicht 3 aus einem Versteifungsmaterial, wie PHC, eine zweite auf dem LFI-Verfahren basierende Glasfaser enthaltende Schicht 4 und eine Kaschierschicht für den optisch vorteilhaft wirkenden Abschluß des Schichtaufbaus im Fahrzeuginneren.

Gemäß dem Herstellungsverfahren wird in eine Negativform eine Dachaußenhaut eingelegt und mittels dem LFI-Verfahren mit einer mit PUR benetzten Glasfaser enthaltenden Schicht 2, die mittels Druckluft in die Negativform geblasen wird, abgedeckt. Die Glasfasern sind vorzugsweise 10 - 100 mm lang.

Die wabenförmige Trägerschicht 3 besteht vorzugsweise aus dem Versteifungsmaterial PHC und wird auf die erste Glasfaser enthaltende Schicht 2 gelegt. Anschließend wird eine auf dem LFI-Herstellungsverfahren basierende zweite Glasfaser enthaltende Schicht (4) mit PUR benetzten Glasfasern mittels Druckluft aufgeblasen. Dann findet ein Preßvorgang durch Schließen der Preßvorrichtungen mit einer vorbestimmten Reaktionszeit bei einem bestimmten Temperaturverlauf statt. Nach dem Öffnen der Preßvorrichtungen kann der Dachmodul-Verbund entnommen werden und nachträglich mit einer Kaschierschicht 5 als fahrzeuginnenseitige Abschlußschicht bedeckt werden.

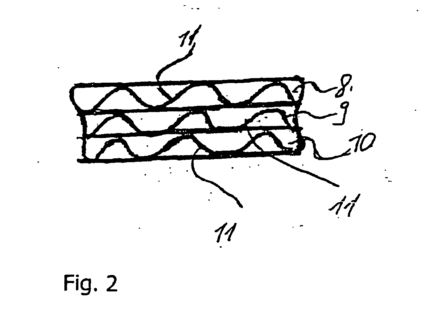

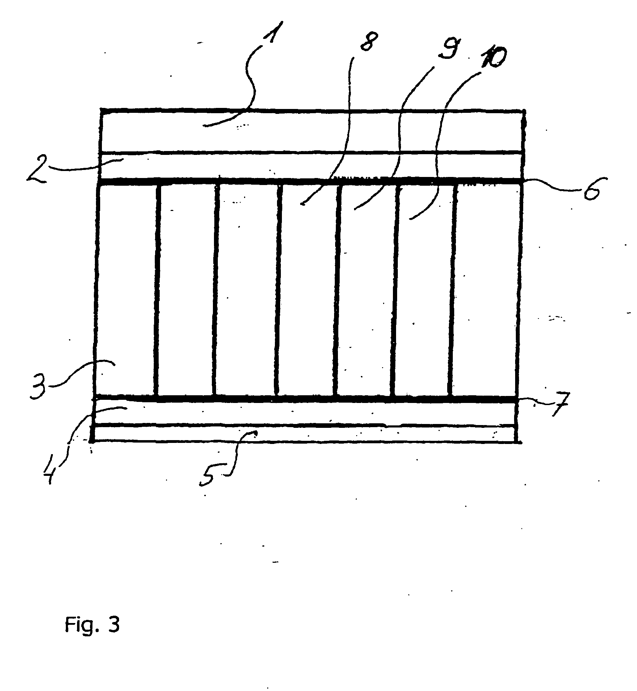

In Fig. 2 wird schematisch eine Draufsicht auf eine Wabenstruktur, wie sie als Trägerschicht verwendet wird, gezeigt. Die Waben sind in verschiedenen Schichten 8, 9 und 10 sandwichartig als Abstandhalter in Form einer Trägerschicht 3 zwischen den beiden Glasfaser enthaltenden Schichten 3 und 4 angeordnet. Die Waben 11 sind nach oben und nach unten offen, so daß insbesondere bei Auftragen der zweiten Glasfaser enthaltenden Schicht 4 ein Eindringen des PUR in die einzelnen Waben 11 stattfindet. Um den dadurch bedingten unnötig hohen Verbrauch an PUR zu reduzieren, wird - wie es in Fig. 3 gemäß einer zweiten Ausführungsform des erfindungsgemäßen Schichtaufbaus des Dachmoduls gezeigt wird - die Trägerschicht 3 mit einem Sperrvlies 6 und 7 ober- und unterseitig abgedeckt, so daß das PUR nur mit einer vordefinierten Eindringtiefe in die Wabenstruktur zur Sicherstellung der Haftung der Glasfaser enthaltenden Schichten 2 und 4 an der Trägerschicht eindringt. Die Glasfasern, welche in den Glasfaser enthaltenden Schichten 2 und 4 enthalten sind, werden durch das Sperrvlies 6, 7 von dem Eindringen in die wabenförmige Struktur abgehalten. Auf diese Weise findet eine Reduzierung der benötigten Glasfasermenge und der PUR-Menge und somit eine Gewichtsersparnis sowie Kosteneinsparungen statt.

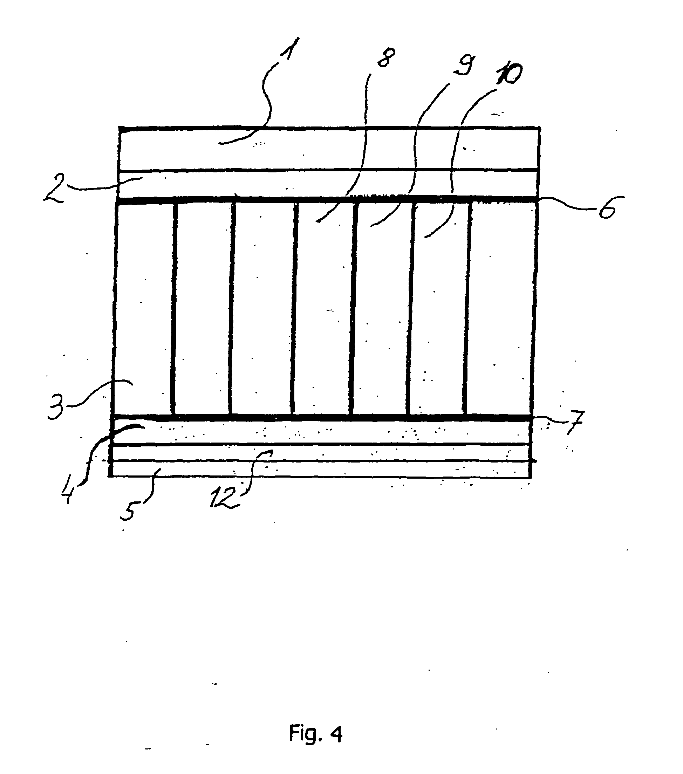

Fig. 4 zeigt eine schematische Querschnittsansicht einer dritten Ausführungsform des erfindungsgemäßen Schichtaufbaus des Dachmoduls. Der Schichtaufbau gemäß der dritten Ausführungsform unterscheidet sich von dem Schichtaufbau gemäß der zweiten Ausführungsform dahingehend, daß zwischen der Glasfaser enthaltenden Schicht 4 und der Kaschierschicht 5 zusätzlich eine Dampfsperrschicht 12 angeordnet ist. Eine derartige Dampfsperrschicht 12 vermeidet die Ansammlung von Feuchtigkeit und damit verbundener Verunreinigungen innerhalb des erfindungsgemäßen Schichtaufbaus, insbesondere innerhalb der wabenförmigen Trägerschicht. Sämtliche in den Anmeldungsunterlagen offenbarten Merkmale werden als erfindungswesentlich beansprucht soweit sie einzeln oder in Kombination gegenüber dem Stand der Technik neu sind.

### Bezugszeichenliste

- 1: Dachaußenhaut
- 2: erste Glasfaser enthaltende Schicht
- 3: wabenförmige Trägerschicht
- 4: zweite Glasfaser enthaltende Schicht
- 5: Kaschierschicht
- 6: erstes Sperrvlies
- 7: zweites Sperrvlies
- 8, 9, 10: Schichten der Trägerschicht mit Waben
- 11: Waben
- 12: Dampfsperrschicht.

## Patentansprüche

1. Dachmodul für ein Fahrzeug mit einer Dachaußenhaut (1) und fahrzeuginnenseitig angeordneten Schichten aus Verbundwerk-stoffen, wobei fahrzeuginnenseitig beginnend von der Dachaußenhaut (1) folgender Schichtaufbau zumindest flächenanteilig besteht:
- eine mittels dem Long-Fiber-Injection-Verfahren hergestellte erste Faser enthaltende Schicht (2), und
- eine Trägerschicht (3) aus Versteifungsmaterial,
**dadurch gekennzeichnet, daß** beginnend von der Dachaußenhaut (1) der Trägerschicht (3) eine mittels dem Long-Fiber-Injection-Vertahren hergestellte zweite Faser enthaltende Schicht (4) folgt.

2. Dachmodul nach Anspruch 1, **dadurch gekennzeichnet, daß** das Versteifungsmaterial der Trägerschicht (3) wabenförmig ausgebildet ist, wobei die Längsachsen der vorzugsweise parallel zueinander verlaufenden Waben (11) senkrecht zu den Schichtebenen ausgerichtet sind.

3. Dachmodul nach einem der vorangegangenen Ansprüche, **dadurch gekennzeichnet, daß** zwischen der ersten Faser enthaltenden Schicht (2) und der Trägerschicht (3) eine erste die Trägerschicht abdeckende Vliesschicht (6) angeordnet ist.

4. Dachmodul nach einem der Ansprüche 1 bis 3, **dadurch gekennzeichnet, daß** zwischen der zweiten Faser enthaltenden Schicht (4) und der Trägerschicht (3) eine zweite die Trägerschicht (3) abdeckende Vliesschicht (7) angeordnet ist.

5. Dachmodul nach Anspruch 3 oder 4, **dadurch gekennzeichnet, daß** die erste und zweite Wliesschicht (6, 7) aus glasfaservliesartigem Material besteht.

6. Dachmodul nach einem der Ansprüche 1 - 5, **dadurch gekennzeichnet, daß** die erste und zweite Faser enthaltende Schicht (2, 4) Glasfasern und Polyurethan enthalten.

7. Dachmodul nach einem der Ansprüche 1 - 6, **dadurch gekennzeichnet, daß** die erste und zweite Faser enthaltende Schicht (2, 4) Welchschaummaterial enthalten.

8. Dachmodul nach einem der vorangegangenen Ansprüche, **gekennzeichnet durch** eine den Schichtaufbau fahrzeuginnenseitig abschließende Kaschlerschicht (5) und/oder Dampfsperrschicht (12).

9. Verfahren zur Herstellung eines vielschichtigen Dachmoduls mit einer Dachaußenhaut und fahrzeuginneriseitig angeordneten Schichten aus Verbundwerkstoffen, mit folgenden Schritten:
- Einlegen der Dachaußenhaut (1) in eine Negativform,
- Bilden einer ersten Faser enthaltenden Schicht (2) **durch** Blasen von mit Polyurethan benetzten Fasern mittels Druckluft auf die fahrzeuginnenseitige Oberfläche der Dachaußenhaut (1),
- Bilden einer Trägerschicht (3) aus Verstelfungsmaterial durch Einlegen derjenigen in die Negativform unter Abdeckung der ersten Faser enthaltenden Schicht (2), und
- Zusammenpressen der Schichten und der Dachaußenhaut in einer vorbestimmten Zeitspanne mit einem vorbestimmten Temperaturverlauf,
**gekennzeichnet durch** den Schritt des Bildens einer zweiten Faser enthaltenden Schicht (4) auf der fahrzeuginnenseitigen Oberfläche der Trägerschicht (3).

10. Verfahren nach Anspruch 9, **dadurch gekennzeichnet, daß** zwischen der ersten Faser enthaltenden Schicht (2) und der Trägerschicht (3) eine erste die Trägerschicht (3) abdeckende Vliesschicht (6) angeordnet wird.

11. Verfahren nach Anspruch 9 oder 10, **dadurch gekennzeichnet, daß** zwischen der zweiten Faser enthaltenden Schicht (4) und der Trägerschicht (3) eine zweite die Trägerschicht (3) abdeckende Vliesschicht (7) angeordnet wird.

12. Verfahren nach Anspruch 10 oder 11, **dadurch gekennzeichnet, daß** die erste und/oder zweite Vliesschicht (6, 7) vor dem Einlegen der Trägerschicht in die Negativform mit den Oberflächen des Versteifungsmaterials der Trägerschicht (3) verbunden werden/wird

13. Verfahren nach einem der Ansprüche 9 bis 12, **dadurch gekennzeichnet, daß** das Dachmodul nach dem Schritt des Zusammenpressens der Schichten und der Dachaußenhaut in eine Abkühlform zur Abkühlung des Dachmoduls vorzugsweise unter Druckbeaufschlagung gelegt wird.

## Claims

1. Roof module for a vehicle having an outer roof skin (1) and layers of composite materials arranged on the inside of the vehicle, there being on the inside of the vehicle, beginning from the outer roof skin (1) and over a proportion of the area, the following layer structure:
- a first fibre-containing layer (2) produced by means of the long fibre injection process, and
- a carrier layer (3) of reinforcing material,
**characterized in that**, beginning from the outer roof skin (1), the carrier layer (3) is followed by a second fibre-containing layer (4) produced by means of the long fibre injection process.

2. Roof module according to claim 1, **characterized in that** the reinforcing material of the carrier layer (3) is honeycomb-like, the longitudinal axes of the honeycombs (11), preferably running parallel to one another, being oriented at right angles to the planes of the layers.

3. Roof module according to one of the preceding claims, **characterized in that** between the first fibre-containing layer (2) and the carrier layer (3) there is arranged a first nonwoven layer (6) covering the carrier layer.

4. Roof module according to one of claims 1 to 3, **characterized in that** between the second fibre-containing layer (4) and the carrier layer (3) there is arranged a second nonwoven layer (7) covering the carrier layer (3).

5. Roof module according to Claim 3 or 4, **characterized in that** the first and second nonwoven layer (6, 7) consist of glass-fibre nonwoven-like material.

6. Roof module according to one of claims 1 to 5, **characterized in that** the first and second fibre-containing layer (2, 4) contain glass fibres and polyurethane.

7. Roof module according to one of claims 1 to 6, **characterized in that** the first and second fibre-containing layer (2, 4) contain soft foam material.

8. Roof module according to one of the preceding claims, **characterized by** a laminating layer (5) and/or vapour barrier layer (12) sealing off the layer structure on the inside of the vehicle.

9. Method for the production of a multilayer roof module having an outer roof skin and layers of composite materials arranged on the inside of the vehicle, **characterized by** the following steps:
- inserting the outer roof skin (1) into a negative mould,
- forming a first fibre-containing layer (2) by blowing fibres wetted with polyurethane onto the surface of the outer roof skin (1) on the inside of the vehicle by means of compressed air,
- forming a carrier layer (3) from reinforcing material by inserting the same into the negative mould, covering the first fibre-containing layer (2), and
- pressing the layers and the outer roof skin together during a predetermined time interval with a predetermined temperature profile,
**characterized by** the step of forming a second fibre-containing layer (4) on the surface of the carrier layer (3) on the inside of the vehicle.

10. Method according to claim 9, **characterized in that** between the first fibre-containing layer (2) and the carrier layer (3) there is arranged a first nonwoven layer (6) covering the carrier layer (3).

11. Method according to claim 9 or 10, **characterized in that** between the second fibre-containing layer (4) and the carrier layer (3) there is arranged a second nonwoven layer (7) covering the carrier layer (3).

12. Method according to claim 10 or 11, **characterized in that**, before the carrier layer is inserted in the negative mould, the first and/or second nonwoven layer (6, 7) is/are joined to the surfaces of the reinforcing material of the carrier layer (3).

13. Method according to one of claims 9 to 12, **characterized in that**, following the step of pressing the layers and the outer roof skin together, the roof module is placed in a cooling mould in order to cool the roof module, preferably with the application of pressure.

## Revendications

1. Module de toit pour un véhicule, avec une couverture extérieure de toit (1) et des couches de matériaux composites disposées du côté intérieur du véhicule, sachant que la structure de couches suivante est présente au moins sur une partie de la surface située du côté intérieur du véhicule, en partant de la couverture extérieure de toit (1) :
- une première couche (2) contenant des fibres, fabriquée au moyen du procédé d'injection à fibres longues, et
- une couche porteuse (3) en matériau de renforcement,
**caractérisé en ce que**, en partant de la couverture extérieure de toit (1), la couche porteuse (3) est suivie d'une deuxième couche (4) contenant des fibres et fabriquée au moyen du procédé d'injection à fibres longues.

2. Module de toit selon la revendication 1, **caractérisé en ce que** le matériau de renforcement de la couche porteuse (3) est réalisé alvéolé, sachant que les axes longitudinaux des alvéoles (11) s'étendant de préférence parallèlement entre elles sont orientés perpendiculairement aux plans des couches.

3. Module de toit selon l'une des revendications précédentes, **caractérisé en ce qu'**une première couche de non-tissé (6) recouvrant la couche porteuse est disposée entre la première couche (2) contenant des fibres et la couche porteuse (3).

4. Module de toit selon l'une des revendications 1 à 3, **caractérisé en ce qu'**une deuxième couche de non-tissé (7) recouvrant la couche porteuse (3) est disposée entre la deuxième couche (4) contenant des fibres et la couche porteuse (3).

5. Module de toit selon la revendication 3 ou 4, **caractérisé en ce que** la première et la deuxième couches de non-tissé (6, 7) sont constituées d'un matériau du genre nappe de fibres de verre.

6. Module de toit selon l'une des revendications 1 à 5, **caractérisé en ce que** la première et la deuxième couches (2, 4) contenant des fibres contiennent des fibres de verre et du polyuréthane.

7. Module de toit selon l'une des revendications 1 à 6, **caractérisé en ce que** la première et la deuxième couches (2, 4) contenant des fibres contiennent une mousse souple.

8. Module de toit selon l'une des revendications précédentes, **caractérisé par** une couche de doublage (5) et/ou une couche pare-vapeur (12) terminant la structure de couches du côté intérieur du véhicule.

9. Procédé de fabrication d'un module de toit à plusieurs couches avec une couverture extérieure de toit et des couches de matériaux composites disposées du côté intérieur du véhicule, comprenant les étapes suivantes:
- mise en place de la couverture extérieure de toit (1) dans un moule négatif,
- formation d'une première couche (2) contenant des fibres par insufflation au moyen d'air comprimé de fibres imprégnées de polyuréthane sur la surface de la couverture extérieure de toit (1) située du côté intérieur du véhicule,
- formation d'une couche porteuse (3) constituée de matériau de renforcement par mise en place de celle-ci dans le moule négatif en recouvrant la première couche (2) contenant des fibres, et
- compression des couches et de la couverture extérieure de toit pendant une durée prédéterminée et avec une allure de température prédéterminée,
**caractérisé par** l'étape consistant à former une deuxième couche (4) contenant des fibres sur la surface de la couche porteuse (3) située du côté intérieur du véhicule.

10. Procédé selon la revendication 9, **caractérisé en ce qu'**une première couche de non-tissé (6) recouvrant la couche porteuse (3) est disposée entre la première couche (2) contenant des fibres et la couche porteuse (3).

11. Procédé selon la revendication 9 ou 10, **caractérisé en ce qu'**une deuxième couche de non-tissé (7) recouvrant la couche porteuse (3) est disposée entre la deuxième couche (4) contenant des fibres et la couche porteuse (3).

12. Procédé selon la revendication 10 ou 11, **caractérisé en ce que** la première couche et/ou la deuxième couche de non-tissé (6, 7) est/sont liée(s) aux surfaces du matériau de renforcement de la couche porteuse (3) avant la mise en place de la couche porteuse dans le moule négatif.

13. Procédé selon l'une des revendications 9 à 12, **caractérisé en ce que** le module de toit est, après l'étape de compression des couches et de la couverture extérieure de toit, placé dans un moule de refroidissement pour refroidir le module de toit, de préférence avec une sollicitation en pression.
